# EUROPEAN PATENT APPLICATION

(11) **EP 2 174 986 A1**
(43) Date of publication of application: **14.04.2010**
(21) Application number: 08778111.8
(22) Date of filing: 11.07.2008
(51) Int. Cl.: C08L 91/00, C08K 5/09, C08K 5/13, C08K 5/42, C10M 129/28, C10M 159/22, C10M 159/24, C10M 169/04, C21D 1/58, C10N 10/04, C10N 20/00, C10N 30/00, C10N 40/20

(54) **HEAT-TREATMENT OIL COMPOSITION**

(30) Priority: 27.07.2007 JP 2007196055
(71) Applicant: Idemitsu Kosan Co., Ltd., Chiyoda-ku Tokyo 100-8321 (JP)
(72) Inventor: ICHITANI, Katsumi, Ichihara-shi Chiba 299-0107 (JP)
(74) Representative: HOFFMANN EITLE
(86) International application number: PCT/JP2008/062596
(87) International publication number: WO 2009/016942

(57) **Abstract**

To provide a heat treatment oil composition which is obtained by mixing a base oil, (A) a metallic detergent-dispersant and (B) an aliphatic carboxylic acid having from 6 to 30 carbon atoms, has high cooling capacity, and is excellent in cooling capability although the composition has a high flash point.

## Description

### [Technical Field]

The present invention relates to a heat treatment oil composition, and more specifically, relates to a heat treatment oil composition having high cooling capability on quenching.

### [Background Art]

A heat treatment, such as quenching, is generally carried out by using a heat treatment liquid for imparting desired hardness to a metallic material. Accordingly, the heat treatment liquid necessarily has such excellent cooling capability that is capable of increasing the hardness of the metallic material.
An oily heat treatment liquid has been frequently used as the heat treatment liquid. This is because an aqueous heat treatment liquid is extremely high in cooling capability to provide risk of quenching cracks formed in the metallic material, and causes larger quenching distortion than an oily heat treatment liquid. Accordingly, an oily heat treatment liquid, i.e., a heat treatment oil, having high cooling capability is demanded.
A heat treatment oil is classified into a cold oil used at a low oil temperature, a hot oil used at a high oil temperature and a semi-hot oil used at an intermediate temperature. The cold oil corresponds to Class 1 of JIS K2242, and the semi-hot oil and the hot oil correspond to Class 2 thereof. The hot oil generally has a kinematic viscosity of about from 10 to 30 mm²/s at 100°C, and the cold oil generally has a kinematic viscosity of about 6 mm²/s or less at 100°C.
Upon quenching at a high oil temperature with a hot oil or a semi-hot oil for reducing quenching distortion, however, there is such a problem that quenching distortion can be largely reduced, but due to the insufficient cooling capability, desired hardness (quenching hardness) cannot be obtained by quenching.
By using a cold oil, on the other hand, although sufficient hardness can be obtained, there is such a problem that the low viscosity oil having a low flash point brings about risk of ignition upon quenching, and oily fumes formed deteriorate the environments.
In summary, there is such a situation that the cooling capability of the heat treatment oil is increased in an oil having a lower viscosity, but a low viscosity oil cannot avoid risk including ignition and the like.
In view of the situation, such a heat treatment oil is demanded that has a high flash point and a high viscosity, but has high cooling capability.

For improving cooling capability of a heat treatment oil, such a quenching oil has been used that is improved in cooling capability by mixing asphalt, a polymer compound or an alkaline earth metal salt of sulfonic acid, salicylic acid or the like with a mineral base oil. However, the quenching oil of this kind is insufficient in cooling capability, and desired hardness may not be imparted to a metallic material.
As recent studies, for example, Patent Document 1 discloses a composition containing an oil having a specific kinematic viscosity and a specific ingredient, an aliphatic polyolefin, a hydrocarbyl-substituted phenol, an alkaline earth metal salt of salicylic acid or the like, and depending on necessity, a hydrocarbyl-substituted succinate ester and the like. Patent Document 2 discloses a composition containing an oil having a specific kinematic viscosity and a specific ingredient, and at least one selected from an alkali metal salt of a saligenin derivative, an aliphatic polyolefin, a hydrocarbyl-substituted phenol, an alkaline earth metal salt of salicylic acid or the like, and a hydrocarbyl-substituted succinate ester.
However, these compounds contain an aliphatic polyolefin, such as polyisobutylene and the like, as an essential component, and they are insufficient in oxidation stability and are not necessarily sufficient in cooling capability.

[Patent Document 1] JP-T-2005-513200
[Patent Document 2] JP-T-2005-513201

### [Disclosure of the Invention]

### [Problems that the Invention is to Solve]

Under the circumstances, an object of the present invention is to provide a heat treatment oil composition having high cooling capability, and the heat treatment oil composition is excellent in cooling capability although the composition has a high flash point.

### [Means for Solving the Problems]

As a result of earnest investigations made by the inventors, it has been unexpectedly found that the object is attained by a composition containing a base oil having mixed therewith a metallic detergent-dispersant and a specific aliphatic carboxylic acid. The present invention has been completed based on the finding.

The present invention provides:
(1) A heat treatment oil composition obtained by mixing a base oil, (A) a metallic detergent-dispersant and (B) an aliphatic carboxylic acid having from 6 to 30 carbon atoms;
(2) The heat treatment oil composition as described in the item (1), wherein the metallic detergent-dispersant as the component (A) is at least one selected from metal salts of sulfonic acid, phenol and salicylic acid;
(3) The heat treatment oil composition as described in the item (1), wherein the metal of the component (A) is an alkaline earth metal;
(4) The heat treatment oil composition as described in the item (1), wherein the aliphatic carboxylic acid is an aliphatic monocarboxylic acid having from 8 to 20 carbon atoms;
(5) The heat treatment oil composition as described in the item (1), wherein a mixing amount of the component (A) is from 0.1 to 20% by mass based on the composition, and a mixing amount of the component (B) is from 0.1 to 20% by mass based on the composition;
(6) The heat treatment oil composition as described in the item (1), wherein a mixing ratio of the component (B) to the component (A) is from 0.1 to 2 in terms of mass ratio; and
(7) The heat treatment oil composition as described in the item (1), wherein the composition has a flash point of 180°C or more.

### [Advantages of the Invention]

According to the present invention, such a heat treatment oil composition having high cooling capability is provided that is excellent in cooling capability although the composition has a high flash point.

### [Best Mode for Carrying out the Invention]

The heat treatment oil composition of the present invention is obtained by mixing a base oil, (A) a metallic detergent-dispersant and (B) an aliphatic carboxylic acid having from 6 to 30 carbon atoms.
The base oil used in the present invention is not particularly limited, and various kinds of mineral oils and synthetic oils may be used. Examples of the mineral oil include a paraffin mineral oil, an intermediate mineral oil, a naphthene mineral oil and the like. Examples of the synthetic oil that can be used include an α-olefin oligomer (an oligomerized product of an α-olefin having from 6 to 16 carbon atoms, and a hydrogenated product thereof), a (co)polymer of an olefin having 2 to 16 carbon atoms, an alkylbenzene, an alkylnaphthalene, a polyphenyl hydrocarbon, various esters, such as a fatty acid ester of a polyhydric alcohol, e.g., neopentyl glycol, trimethylolpropane, pentaerythritol and the like, a polyoxyalkylene glycol derivative, and the like.

As the base oil, those having a kinematic viscosity of from 1 to 50 mm²/s at 100°C are preferably used. In the case where the kinematic viscosity is less than 1 mm²/s, there are cases where it is dangerously flammable, and in the case where the kinematic viscosity exceeds 50 mm²/s, it is inconvenient for handling due to the high viscosity. In view of the standpoint, the kinematic viscosity is more preferably from 1.5 to 45 mm²/s, and particularly preferably from 2 to 40 mm²/s:
The base oil preferably has a flash point of 150°C or more, and more preferably 170°C or more. In the case where the flash point is 150°C or more, there is less risk of ignition or the like, and simultaneously, oily fumes can be suppressed from being generated upon a heat treatment.
The base oil preferably has a viscosity index of 85 or more, and more preferably 95 or more. It also preferably has an aromatic content (%C_{A}) of 10 or less, more preferably 7 or less, further preferably 3 or less, and particularly preferably 1 or less. In the case where the viscosity index is 85 or more and the aromatic content (%C_{A}) is 10 or less, the oxidation stability of the heat treatment oil composition can be favorably maintained.
The mineral oils and synthetic oils may be used solely or after mixing two or more of them at an arbitrary ratio.

As the metallic detergent-dispersant used as the component (A) of the present invention, various known materials may be used without particular limitation, and preferred examples thereof include metal salts of sulfonic acid, phenol and salicylic acid.
Examples of the sulfonic acid include an alkyl-substituted aromatic sulfonic acid having a molecular weight of about from 300 to 1,500, and specific examples thereof include an alkylbenzenesulfonic acid, an alkylnaphthalenesulfonic acid, a petroleum sulfonic acid and the like. The sulfonic acid may be thiosulfonic acid.
Examples of the phenol include an alkylphenol and a sulfide thereof, a Mannich reaction product of an alkylphenol, and the like, and examples of the salicylic acid include an alkylsalicylic acid.
The alkyl substituent of the sulfonic acid, the phenol and the salicylic acid is preferably a linear or branched alkyl group having from 1 to 20 carbon atoms, which may be saturated or unsaturated. A compound having from 1 to 7, and particularly from 1 to 4, of the substituents is preferably used.

Examples of the metal in the metallic detergent-dispersant, such as metal salts of sulfonic acid, phenol and salicylic acid, include an alkali metal and an alkaline earth metal. Among these, an alkaline earth metal is preferred, and for example, Ca, Ba and Mg are used with Ca and Ba being particularly preferred, from the standpoint of cooling capability.

As the metal salts of sulfonic acid, phenol and salicylic acid, metal salts themselves and those having been made perbasic with a metal oxide or hydroxide and carbon dioxide are preferably used.
Accordingly, as the metallic detergent-dispersant as the component (A) in the present invention, neutral, basic and perbasic salts may be widely used, and for example, ones having a basic value of about from 0 to 600 mgKOH/g are used. Among these, ones having a basic value of from 50 to 400 mgKOH/g are preferred.
The basic value referred herein is a "total basic value" measured according to the perchloric acid method defined in the item 7 of "Petroleum Products and Lubricating Oils, Neutralization Value Test Method" in JIS K2501.

In the present invention, the metallic detergent-dispersant may be used solely or may be used after mixing two or more kinds thereof at an arbitrary ratio as the component (A). The mixing amount thereof is preferably in a range of from 0.1 to 20% by mass based on the composition. In the case where the mixing amount is less than 0.1% by mass, the cooling capability may be insufficiently improved, and in the case where it exceeds 20% by mass, the cooling capability may be deteriorated due to increased viscosity, and the advantage obtained is saturated to increase the cost. In view of the factors, the mixing amount is more preferably from 1 to 10% by mass.

As the aliphatic carboxylic acid having from 6 to 30 carbon atoms as the component (B) of the present invention, a saturated or unsaturated aliphatic monocarboxylic acid and a saturated or unsaturated aliphatic dicarboxylic acid, each having a linear chain or a branched chain, are preferably used.
Specific examples of the aliphatic monocarboxylic acid include a saturated aliphatic acid, such as hexanoic acid (caproic acid), heptanoic acid, octanoic acid (caprylic acid), nonanoic acid, decanoic acid (capric acid), undecanoic acid, dodecanoic acid, tridecanoic acid, tetradecanoic acid (myristic acid), pentadecanoic acid, hexadecanoic acid (palmitic acid), heptadecanoic acid, octadecanoic acid (stearic acid), nonadecanoic acid, icosanoic acid, henicosanic acid, docosanoic acid, tricosanoic acid, tetracosanoic acid, pentacosanoic acid, hexacosanoic acid, heptacosanoic acid, octacosanoic acid, nonacosanoic acid, triacontanoic acid and the like (the saturated aliphatic acids may be linear or branched), an unsaturated aliphatic acid, such as hexenoic acid, heptenoic acid, octenoic acid, nonenoic acid, decenoic acid, undecenoic acid, dodecenoic acid, tridecenoic acid, tetradecenoic acid, pentadecenoic acid, hexadecenoic acid, heptadecenoic acid, octadecenoic acid (including oleic acid), octadecadienoic acid (including linoleic acid), octadecatrienoic acid (including linolenic acid), nonadecenoic acid, icosenoic acid, henicosenoic acid, docosenoic acid, tricosenoic acid, tetracosenoic acid, pentacosenoic acid, hexacosenoic acid, heptacosenoic acid, octacosenoic acid, nonacosenoic acid, triacontenoic acid and the like (the unsaturated aliphatic acids may be linear or branched, and may have a double bond at an arbitrary position), and the like.
Specific examples of the aliphatic dicarboxylic acid include a saturated aliphatic dicarboxylic acid, such as octanedioic acid (suberic acid), nonanedioic acid (azelaic acid), decanedioic acid (sebacic acid), undecanedioic acid, dodecanedioic acid, tridecanedioic acid, tetradecanedioic acid, hexadecanedioic acid, octadecanedioic acid, icosanedioic acid, docosanedioic acid, tetracosanedioic acid, hexacosanedioic acid, octacosanedioic acid and the like (the dicarboxylic acids may be linear or branched), an unsaturated aliphatic dicarboxylic acid corresponding to the saturated aliphatic dicarboxylic acid (the unsaturated aliphatic acids may be linear or branched, and may have a double bond at an arbitrary position), and the like.
Among the aliphatic carboxylic acids, an aliphatic monocarboxylic acid having from 8 to 20 carbon atoms is preferred from the standpoint of cooling capability, and specific examples thereof include caprylic acid, capric acid, lauric acid, myristic acid, palmitic acid, stearic acid, isostearic acid, oleic acid, linoleic acid, linolenic acid and the like.

In the present invention, only one kind of the aliphatic carboxylic acid may be used as the component (B), and two or more of them may be used after mixing at an arbitrary ratio. The mixing amount thereof is preferably in a range of from 0.1 to 20% by mass based on the composition. In the case where the mixing amount is less than 0.1% by mass, the cooling capability may be insufficiently improved, and in the case where it exceeds 20% by mass, the advantage obtained may be saturated to fail to obtain advantages appropriate to the cost. In view of the factors, the mixing amount is more preferably from 1 to 10% by mass.

In the present invention, the mixing ratio of the aliphatic carboxylic acid as the component (B) to the metallic detergent-dispersant as the component (A) is preferably from 0.1 to 2, and more preferably from 0.2 to 1.5, in terms of mass ratio. In the case where the mixing ratio is in the range, favorably cooling capability is obtained.

The heat treatment oil composition of the present invention is prepared basically by mixing the base oil, the component (A) and the component (B), and depending on necessity, may be mixed with an additive that has been ordinarily used in a heat treatment oil, such as a vapor film breaking agent, a glaze improving agent, an antioxidant and the like.
Examples of the vapor film breaking agent include various kinds of polyolefins, for example, an ethylene-α-olefin copolymer (where the α-olefin has from 3 to 20 carbon atoms), such as an ethylene-propylene copolymer and the like, a polymer of an α-olefin having from 5 to 20 carbon atoms, such as 1-hexene, 1-octene, 1-decene, 1-dodecene, 1-tetradecene, 1-hexadecene, 1-octadecene and the like, a polymer of an olefin having 3 or 4 carbon atoms, such as polypropylene, polybutene, polyisobutylene and the like, and hydrogenated products of the polyolefins, a polymer compound, such as polymethacrylate, polymethacrylate, polystyrene, a petroleum resin and the like, asphalt, and the like. Among these, asphalt is preferred from the standpoint of cooling capability and stability, and an ethylene-α-olefin copolymer, such as an ethylene-propylene copolymer, polybutene and polyisobutylene are preferred from the standpoint of glaze. The vapor film breaking agent preferably has an average molecular weight of from 800 to 100,000. The mixing amount thereof is generally from 0.5 to 10% by mass based on the heat treating oil composition.

Examples of the glaze improving agent include fat and oil, a fatty acid derived from fat and oil, alkyl or alkenyl succinimide, a substituted hydroxyaromatic carboxylic acid ester derivative and the like, which have been known in the art. Examples of the antioxidant include an amine antioxidant, a hindered phenol antioxidant and the like, which have been known in the art.

The heat treatment oil composition of the present invention contains the aforementioned components, and while the properties thereof are not particularly limited, the flash point of the composition is preferably 180°C or more, and more preferably 190°C or more. The composition of the present invention further preferably has a higher flash point, such as 200°C or more, 220°C or more, 240°C or more, 250°C or more and 260°C or more. The composition that has a higher flash point can be used favorably as a hot oil and a semi-hot oil used for a heat treatment at a high oil temperature.
The composition that has a flash point of 200°C or more is classified into Petroleum Liquid Class 4 under the hazardous material classification of Japanese Fire Defense Law, and is not under the regulation of designated amount of the law, and the composition that has a flash point of 250°C or more is classified into a designated flammable material (non-hazardous material), and is under the relaxed regulation of the law.

The heat treatment oil composition of the present invention has excellent cooling capability even though the composition has a high flash point, for example, of 250°C or more.
The cooling capability referred herein can be specifically expressed as a cooling time (second) from 800°C to 300°C of a cooling curve of a silver test piece in JIS K2242 (which may be hereinafter referred to as "300°C number of second"), and a shorter cooling time means good cooling capability, which shows that a quenched product having sufficient hardness is provided by quenching.
The heat treatment oil composition of the present invention has an extremely short 300°C number of second, and the composition classified into a hot oil or a semi-hot oil having a flash point of about 260°C can have a cooling time of 6.0 seconds or less, and can further have a cooling time of 5.0 seconds or less or 4.0 seconds or less. The composition classified into a cold oil having a flash point of about 190°C can have a 300°C number of second of about 3.5 seconds.
The cooling capability is significantly higher than a known heat treatment oil having a comparable flash point.

### [Example]

The present invention will be described in more detail with reference to examples below, but the present invention is not limited to the examples. The property and capability of the heat treatment oil composition were measured in the following manners.

### (1) Cooling Capability

According to the cooling capability test defined in JIS K2242, a prescribed silver test piece heated to 810°C was placed into a sample (heat treatment oil), and a cooling curve of the silver test piece was measured. The cooling time required for cooling from 800°C to 300°C on the cooling curve (300°C number of second) was measured as cooling capability. A smaller number of second means higher cooling capability.

### (2) Characteristic Number of Second

A period of time (number of second) until reaching the characteristic temperature (i.e., the temperature where the vapor film stage was completed) on the cooling curve measured according to JIS K2242 in the item (1) was measured.

### (3) Kinematic Viscosity at 100°C

It was measured according to JIS K2283.

### (4) Flash Point

It was measured according to JIS K2256 (COC Method).

### (5) Quenching Test

A quenching operation was carried out under the following experimental conditions, and the quenched product was measured for hardness (quenched hardness).
Quenching Test Conditions
Material to be processed (Test Piece) : SCM420, 15 mm in diameter x 30 mm in length
Heating Temperature: 850°C for 30 minutes in a pure nitrogen atmosphere
Quenching Conditions: oil temperature: 120°C, no agitation, cooling time: 3 minutes
Method for measuring Hardness
Position of Measurement of Hardness: measured at position of 1/2 of radius, r = 3.75 mm
Apparatus for measuring Hardness: Vickers hardness meter

### Examples 1 to 17 and Comparative Examples 1 to 6

The base oils and additives shown in Table 1 were used and mixed at the ratios shown in Table 1 to prepare heat treatment oil compositions, which were measured for property and capability. The results are shown in Table 1. The quenching test was carried out for the heat treatment oil compositions of Example 6 and Comparative Example 6, and the results (quenched hardness) are shown in Table 1.

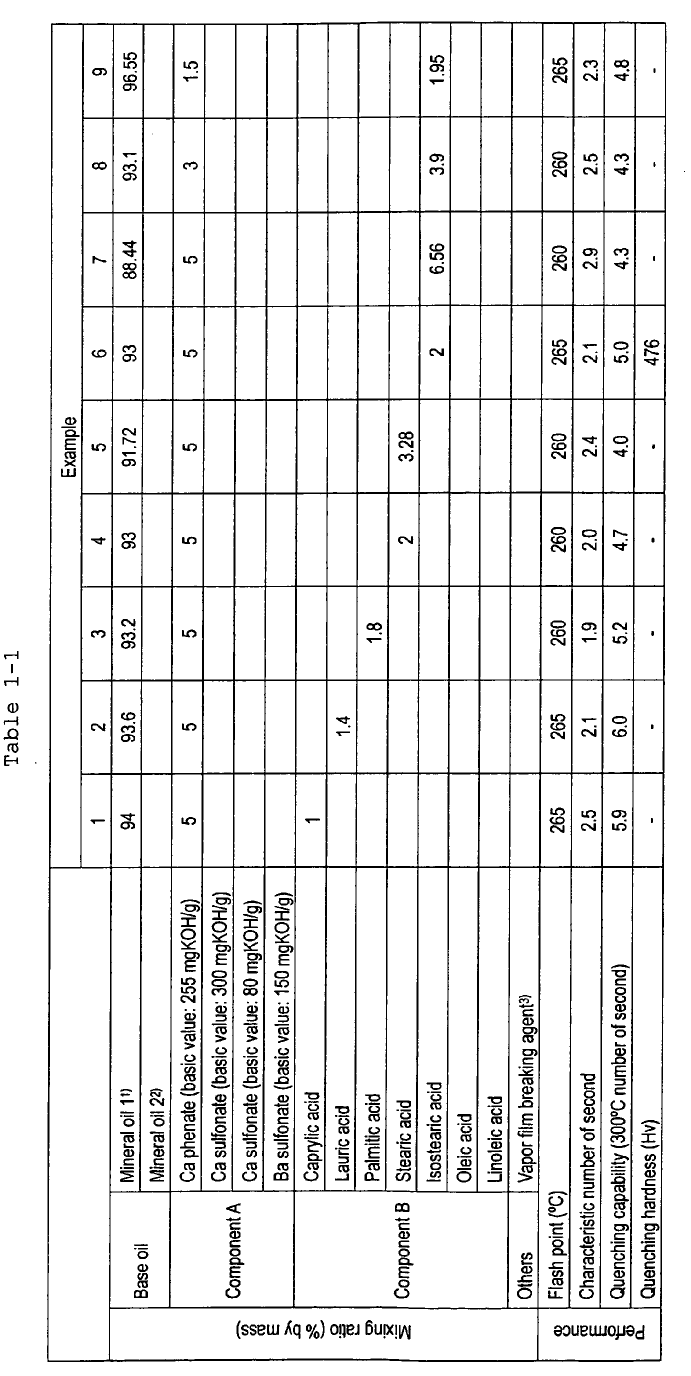

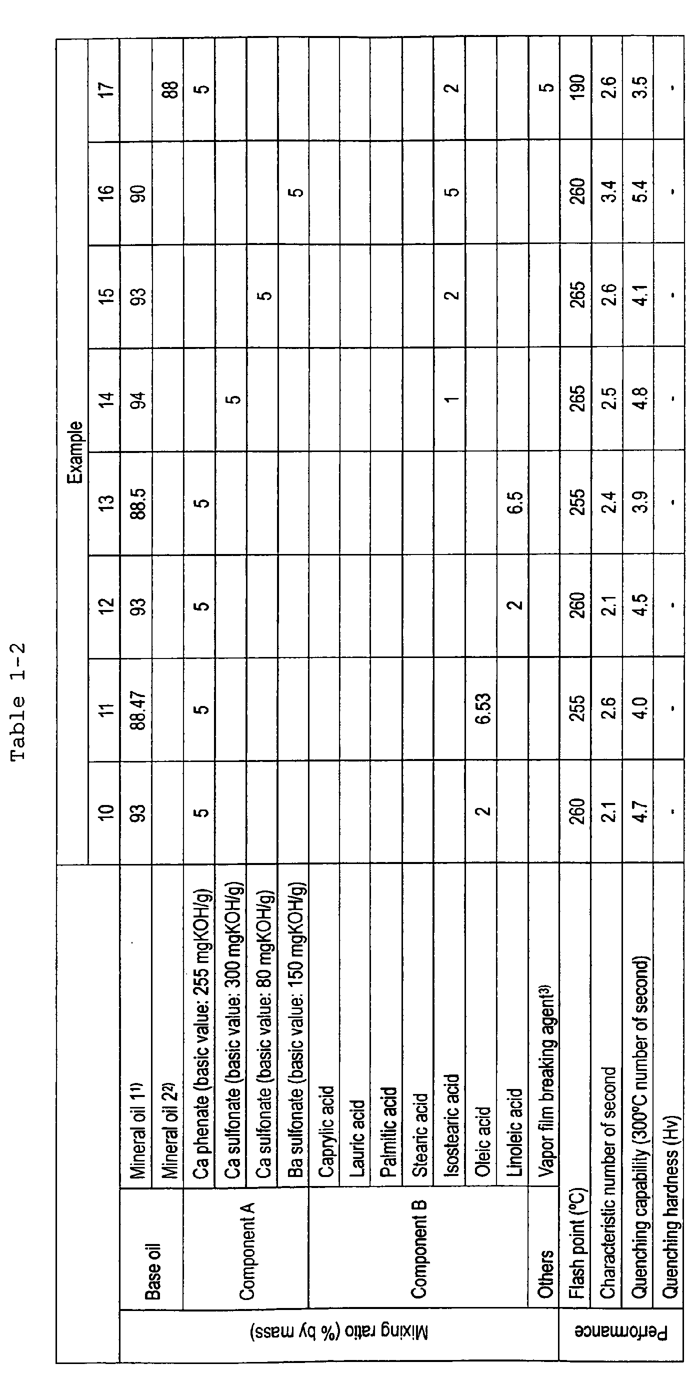

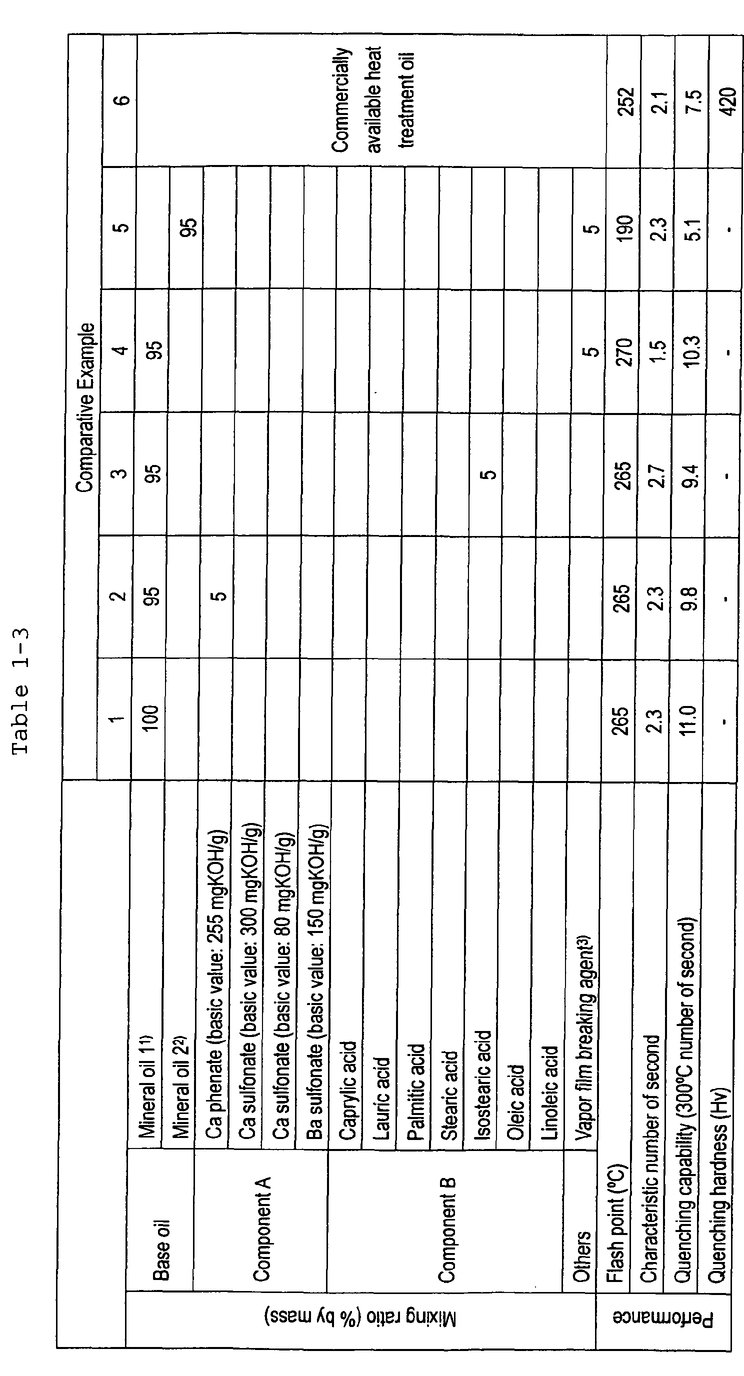

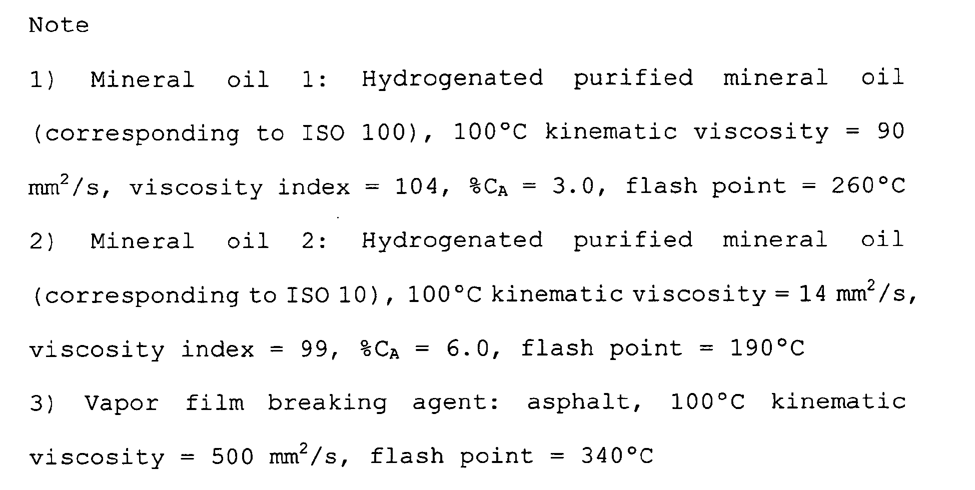

It is understood from Table 1 that the heat treatment oil compositions of the present invention (Examples 1 to 16) having a flash point of about 260°C has a short 300°C number of second of 6.0 seconds or less, which shows excellent cooling performance.
On the other hand, the heat treatment oil compositions that do not contain one or both of the components (A) and (B) of the present invention (Comparative Examples 1 to 3) and the heat treatment oil composition containing the vapor film breaking agent instead of the components (A) and (B) of Comparative Example 4 have a 300°C number of second of 9.4 seconds or more, which shows deteriorated cooling performance. The commercially available heat treatment oil (Comparative Example 6) having a flash point of about 250°C has a 300°C number of second of 7.5 seconds and is deteriorated in cooling capability as compared to the heat treatment oil of the present invention having a flash point of about 260°C.
The quenched hardness in the quenching test with the heat treatment oil of the present invention (Example 6, 300°C number of second of 5.0 second) and the commercially available heat treatment oil (Comparative Example 6, 300°C number of second of 7.5 seconds) is 476 Hv for the former and 420 Hv for the later, and thus the difference in quenching performance between the present invention and the comparative example can be clearly comprehended.
Furthermore, it is understood that the heat treatment oil composition having a flash point of about 190°C corresponding to a cold oil (Example 17) has a 300°C number of second of 3.5 seconds and is markedly excellent in cooling performance as compared to the heat treatment oil of Comparative Example 5 having similarly a flash point of about 190°C and containing the vapor film breaking agent instead of the components (A) and (B) (300°C number of second of 5.1 seconds).

### [Industrial Applicability]

According to the present invention, such a heat treatment oil composition is provided that has high cooling capability and is excellent in cooling capability although the composition has a high flash point. Therefore, in the case where a quenching operation is carried out with a so-called hot oil or semi-hot oil for reducing quenching distortion, it can be advantageously utilized as a heat treatment oil having necessary cooling capability.

## Claims

1. A heat treatment oil composition obtained by mixing a base oil, (A) a metallic detergent-dispersant and (B) an aliphatic carboxylic acid having from 6 to 30 carbon atoms.

2. The heat treatment oil composition as claimed in claim 1, wherein the metallic detergent-dispersant as the component (A) is at least one selected from metal salts of sulfonic acid, phenol and salicylic acid.

3. The heat treatment oil composition as claimed in claim 1, wherein the metal of the component (A) is an alkaline earth metal.

4. The heat treatment oil composition as claimed in claim 1, wherein the aliphatic carboxylic acid is an aliphatic monocarboxylic acid having from 8 to 20 carbon atoms.

5. The heat treatment oil composition as claimed in claim 1, wherein a mixing amount of the component (A) is from 0.1 to 20% by mass based on the composition, and a mixing amount of the component (B) is from 0.1 to 20% by mass based on the composition.

6. The heat treatment oil composition as claimed in claim 1, wherein a mixing ratio of the component (B) to the component (A) is from 0.1 to 2 in terms of mass ratio.

7. The heat treatment oil composition as claimed in claim 1, wherein the composition has a flash point of 180°C or more.
